# EUROPÄISCHE PATENTSCHRIFT

(11) **EP 4 239 238 B1**
(45) Veröffentlichungstag und Bekanntmachung des Hinweises auf die Patenterteilung: **01.05.2024**
(21) Anmeldenummer: 22160137.0
(22) Anmeldetag: 04.03.2022
(51) Int. Cl.: F16L 37/088

(54) **KUPPLUNGSBUCHSE MIT AUTOMATISCH AKTIVIERTEM RÜCKHALTER**
COUPLING SOCKET WITH AUTOMATICALLY ACTIVATED RETAINER
DOUILLE D'ACCOUPLEMENT POURVUE DE RETENUE À ACTIVATION AUTOMATIQUE

(43) Veröffentlichungstag der Anmeldung: 06.09.2023
(73) Patentinhaber: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Häckel, Andre, 34513 Waldeck (DE); Rohde, Reiner, 34323 Malsfeld (DE)
(74) Vertreter: Andrejewski - Honke Patent- und Rechtsanwälte Partnerschaft mbB

(56) Entgegenhaltungen:
- EP-A1- 2 541 118

## Beschreibung

Die Erfindung betrifft eine Kupplungsbuchse gemäß dem Oberbegriff nach Anspruch 1, sowie eine teilautomatische Fluidkupplung nach Anspruch 14 und die Verwendung einer Kupplungsbuchse bzw. einer Fluidkupplungnach Anspruch 15.

Eine derartige Kupplungsbuchse ist aus US 10,808,872 B2 bekannt. Der Indikator der Steckersicherung ist einstückig und integral mit dem Rückhalter verbunden und ist wie der Rückhalter etwa u-förmig ausgestaltet. Der U-Rücken des Indikators bildet einen fluchtenden Abschluss mit dem Kupplungskörper und geht in eine U-Basis bzw. einen Rücken des Rückhalters über. Der Indikator umfasst außerdem zwei Schenkel, welche jeweils mit dem Rücken des Indikators verbunden sind und durch einen umlaufenden Bund des Kupplungssteckers in radialer Richtung auseinander spreizbar sind. In der ausgerückten Stellung der Steckersicherung und vor Einführung des Kupplungssteckers schlagen die nicht gespreizten und damit entspannten Enden der Schenkel an jeweils einen Vorsprung des Kupplungskörpers an. Die beiden Vorsprünge sind im Inneren des Kupplungskörpers angeordnet und sorgen dafür, dass die Steckersicherung durch Druck auf den Rücken nicht weiter in den Kupplungskörper eingeschoben werden kann. Hierdurch wird dem Nutzer ein Teil der Funktion des automatischen Einzugs bzw. der automatischen Aktivierung bereitgestellt. Denn vor allem durch eine definierte, ausgerückte Stellung wird ein automatisches Einziehen der Steckersicherung bei Einführung des Kupplungssteckers ermöglicht.

Bei Einführung des Kupplungssteckers in den Kupplungskörper nach US 10,808,872 B2 lenkt der Kupplungsstecker bzw. dessen umlaufender Bund zunächst die Indikatorschenkel elastisch nach axial einwärts aus, bis diese einwärtig an dem Kupplungskörper anschlagen. Durch weiteres Einführen des Kupplungssteckers werden die Schenkel radial auseinandergespreizt, so dass die U-Schenkel nicht mehr an den Vorsprüngen anschlagen. Dann wird eine in den Schenkeln gespeicherte Rückstellenergie freigesetzt, wodurch die Enden der Schenkel jeweils entlang einer Rampe des Kupplungskörpers gleiten. Da die beiden Rampen im Querschnitt und in Einschubrichtung der Steckersicherung schräg aufeinander zulaufen, wird die Steckersicherung nach radial einwärts weiter in den Kupplungskörper hinein gezogen bis die eingerückte Stellung erreicht ist. Jetzt hintergreift der Rückhalter den umlaufenden Bund des Kupplungssteckers, so dass der Kupplungsstecker gegen ein Herausziehen aus dem Kupplungskörper gesichert ist. Im Ergebnis hat ein Nutzer dieser Fluidkupplung nur noch die Aufgabe, den Kupplungsstecker in die Kupplungsbuchse hineinzustecken, wodurch der Montageaufwand weiter verringert wird. Dies ist beispielsweise in den Fällen von größerem Vorteil, bei denen der Bauraum so begrenzt ist, dass der Monteur die Kupplungsbuchse nicht mit einer Hand umfassen kann, um die Steckersicherung manuell hineinzudrücken.

Eine weitere derartige Kupplungsbuchse ist aus EP2541118 A1 bekannt.

Es wurde allerdings der Nachteil beobachtet, dass nach einiger Zeit und in einigen Fällen bei verschiedenen Ausführungsformen verschiedener Hersteller die Anzeigefunktion nicht mehr gegeben war, weil sich die Steckersicherung auch ohne Kupplungsstecker in den Kupplungskörper schieben ließ. Ebenso fiel der Defekt auf, dass die Steckersicherung nach einiger Zeit und in einigen Fällen nur in einem ungenügenden Ausmaß in den Kupplungskörper eingezogen wurde. Der Erfindung liegt daher die Aufgabe zugrunde, eine Kupplungsbuchse zu schaffen, die die Funktionalität des Indikators bzw. der Steckersicherung ertüchtigt und damit eine längere Lebensdauer des Indikators bzw. der Steckersicherung bietet. Aus der Praxis sind außerdem Fluidkupplungen bzw. Kupplungsbuchsen bekannt, bei denen die Steckersicherung sich nur schwer, beispielsweise unter hebelndem Einsatz eines Schraubenziehers, in die ausgerückte Position überführen lässt. Der Erfindung liegt daher die vorzugsweise Aufgabe zugrunde, einen besonders nutzerfreundlichen Mechanismus zum Lösen der Fluidkupplung bereitzustellen.

Die genannte/n Aufgabe/n wird/werden gelöst durch eine Schnellkupplung gemäß Anspruch 1.

Der Erfindung liegt zunächst die Erkenntnis zugrunde, dass die eingangs genannten Nachteile auf eine Instabilität der Schenkel des Indikators zurückzuführen sind. Denn diese müssen aufgrund der Aufspreizbarkeit wenigstens abschnittsweise relativ dünn sein. Gleichzeitig müssen die Schenkel präzise auf den Vorsprüngen in der ausgerückten Stellung sitzen, damit die Anzeigefunktion gewahrt bleibt. Es wurde gefunden, dass unsachgemäße Handhabungen bei Montage bzw. Wartung und/oder eine mit zunehmender Lebensdauer einsetzende Materialverschlechterung ursächlich für den eingangs genannten Nachteil sind. Beides kann sich negativ auf die Federelastizität der U-Schenkel auswirken, so dass ein vorzeitiges Einschieben möglich ist und/oder die Steckersicherung nur ungenügend in den Kupplungskörper eingezogen wird.

Der Erfindung liegt ferner die Erkenntnis zugrunde, dass der Indikator bzw. der Einzugsmechanismus der Kupplungsbuchse entscheidend stabilisiert werden kann, wenn dafür Sorge getragen wird, dass die Schenkel während der axialen Auslenkung durch einen Kupplungsstecker ihren Abstand zueinander beibehalten und insbesondere nicht auseinander gespreizt werden. Die Auseinanderspreizbarkeit bedingt inhärent relativ bewegliche Schenkel, so dass insbesondere die federelastische Lagerstelle, in der Regel der Übergang vom Schenkel zum Rücken, eine Schwachstelle bildet. Diese mag anfangs noch ausreichend federelastisch sein, neigt aber nach einiger Zeit zur Verringerung der Elastizität. Das wird insbesondere kritisch, wenn die federelastische Lagerstelle belastet wird, wenn beispielsweise Wartungsarbeiten stattfinden und die Fluidkupplung getrennt und danach wieder zusammengesetzt wird. Durch die Vermeidung der radialen Auslenkung bzw. Aufspreizung der Schenkel wird die Kupplungsbuchse bzw. die Steckersicherung deutlich ertüchtigt und die eingangs genannte Aufgabe im Ergebnis gelöst.

Der Begriff "teilautomatisch" meint vorzugsweise das automatische Einziehen der Steckersicherung bzw. des Rückhalters von der ausgerückten in die eingerückte Stellung, wenn der Kupplungsstecker bevorzugt vollständig und zweckmäßigerweise manuell in die Kupplungsbuchse eingeführt wurde. Der Ausdruck "lösbar" meint mit Vorteil das Lösen der Verbindung auf reversible und damit zerstörungsfreie Weise.

Die Steckersicherung kann einstückig ausgebildet sein, so dass der Rückhalter und der Indikator lediglich in zerstörender Weise voneinander getrennt werden können. Mit Vorteil ist die Steckersicherung integral ausgebildet und kann insbesondere mittels Spritzguss hergestellt sein. Es ist möglich, dass die Steckersicherung mehrteilig ausgebildet ist, so dass der Rückhalter und der Indikator separate, vorzugsweise jeweils mittels Spritzguss hergestellte Teile sind. Der Indikator und der Rückhalter können gemäß einer Ausführungsform mittels Formschluss zu einer mehrteiligen Steckersicherung zusammengesetzt werden. Es ist möglich, dass der Rückhalter und der Indikator aus unterschiedlichen Richtungen in den Kupplungskörper einführbar sind. Vorzugsweise sind der Rückhalter und der Indikator aus der gleichen Richtung in den Kupplungskörper einführbar.

Der Kupplungskörper umfasst zweckmäßigerweise ein erstes Körperende und ein zweites Körperende. Das erste Körperende ist vorzugsweise einem Kupplungsstecker zugeordnet bzw. zuzuordnen. Der Steckerabschnitt des Kupplungskörpers wird bevorzugtermaßen von dem ersten Körperende begrenzt. Vorteilhafterweise definiert eine Spitze eines Kupplungssteckers in axialer Richtung die axiale Ausdehnung des Steckerabschnitts. Mit Vorteil umfasst der Kupplungskörper einen Verbindungsabschnitt zum Verbinden eines Rohrs oder eines Aggregats. Im Falle eines Aggregats mag es sich beispielsweise um eine Pumpe, einen Tank, eine Düse oder dergleichen handeln. Zweckmäßigerweise umfasst der Kupplungskörper einen Fluidkanal, welcher den Steckerabschnitt mit dem Verbindungsabschnitt verbindet. Es ist möglich, dass der Kupplungskörper einen Übergangsabschnitt aufweist, wobei der Übergangsabschnitt bevorzugtermaßen zwischen dem Steckerabschnitt und dem Verbindungsabschnitt angeordnet ist. Der Verbindungsabschnitt mag zum reversiblen oder irreversiblen Verbinden mit einem Rohr oder einem Aggregat ausgestaltet sein. Im Falle der reversiblen Verbindung mit einem Rohr kann der Verbindungsabschnitt umlaufende Rillen zur Erzeugung eines Presssitzes aufweisen. Es ist bevorzugt, dass der Verbindungsabschnitt mit dem Rohr oder dem Aggregat mittels Schweißen, insbesondere mittels Laserschweißen, verbunden bzw. verbindbar ist. Es ist möglich, dass der Verbindungsabschnitt eine Aufnahme zum Einführen eines Rohrs oder eines Abschnitts eines Aggregats umfasst. Es ist gemäß einer Ausführungsform möglich, dass der Kupplungskörper bzw. der Verbindungsabschnitt einstückig bzw. integral in das Aggregat übergeht.

Es ist bevorzugt, dass der Kupplungskörper als separates Teil, insbesondere als Spritzgussteil, hergestellt ist. Der Kupplungskörper kann einstückig bzw. integral ausgebildet sein. Es ist möglich, dass der Kupplungskörper mehrteilig ausgebildet ist. Gemäß einer bevorzugten Ausführungsform umfasst der Kupplungskörper zwei oder mehr mittels Rastverbindung miteinander verbundene Teile. Der Kupplungskörper mag gerade oder gewinkelt ausgebildet sein. Im Falle eines gerade ausgestalteten Kupplungskörpers verläuft die Mittenachse des Steckerabschnitts parallel und vorzugsweise konzentrisch mit einer Mittenachse des Verbindungsabschnitts. Wenn der Kupplungskörper gewinkelt ausgebildet ist, verläuft die Mittenachse des Steckerabschnitts in einem Längsschnitt des Kupplungskörpers gewinkelt zu einer Mittenachse des Verbindungsabschnitts. Die Mittenachse des Steckerabschnitts definiert eine axiale, eine radiale und eine Umlaufrichtung des Steckerabschnitts. In einer Vorderansicht auf das erste Körperende bzw. in einem Querschnitt des Kupplungskörpers mag eine radiale Richtung zwei Richtungskomponenten aufweisen. Eine Einschubrichtung der Steckersicherung in dem Kupplungskörper kann als erste Richtung bzw. radiale Richtungskomponente verstanden werden. Senkrecht zur Einschubrichtung und senkrecht zur axialen Richtung des Steckerabschnitts mag eine als Querrichtung bereichnahe Richtung bzw. Richtungskomponente verlaufen. Die Mittenachse des Verbindungsabschnitts kann eine axiale, eine radiale und eine Umlaufrichtung des Verbindungsabschnitts definieren.

Der Kupplungskörper umfasst vorzugsweise ein zweites Körperende. Mit Vorteil definiert das zweite Körperende ein Ende des Verbindungsabschnitts. Der Verbindungsabschnitt wird zweckmäßigerweise durch einen Überlapp des Kupplungskörpers mit dem Rohr oder dem Aggregat definiert. Vorzugsweise verbindet der Fluidkanal das erste Körperende bzw. den Steckerabschnitt mit dem zweiten Körperende bzw. mit dem Verbindungsabschnitt. Der Ausdruck "axial einwärts" meint vorzugsweise die axiale Richtung des Steckerabschnitts von dem ersten Körperende ausgehend weiter in den Kupplungskörper hinein. Der Begriff "axial einwärts" meint vorzugsweise auch die axiale Richtung vom Steckerabschnitt bzw. Übergangsabschnitt ausgehend zum zweiten Körperende hin, weil das Rohr bzw. das Aggregat ein Inneres definieren und nicht der Kupplungskörper.

Der Kupplungsstecker umfasst vorzugsweise ein Verriegelungselement, welches bevorzugtermaßen mit dem Rückhalter der Kupplungsbuchse zur Verriegelung des Kupplungssteckers in der Kupplungsbuchse wechselwirkt. Der Kupplungsstecker umfasst mit Vorteil einen Kupplungsabschnitt zum Einführen in die Kupplungsbuchse. Der Kupplungsabschnitt entspricht vorzugsweise demjenigen Abschnitt des Kupplungssteckers, welcher sich im vollständig eingeführten Zustand des Kupplungssteckers in der Kupplungsbuchse innerhalb der Kupplungsbuchse befindet. Der Kupplungsabschnitt weist bevorzugtermaßen eine Längsachse auf, wobei die Längsachse des Kupplungsabschnitts vorzugsweise parallel und besonders vorzugsweise konzentrisch zur Mittenachse des Steckerabschnitts des Kupplungskörpers ausgerichtet ist. Die Längsachse des Kupplungsabschnitts definiert eine axiale, eine radiale und eine Umfangsrichtung des Kupplungsabschnitts des Kupplungssteckers.

Gemäß einer bevorzugten Ausführungsform umfasst der Kupplungsstecker einen Anschlussabschnitt zum Anschließen an ein Rohr oder an ein Aggregat. Der Anschlussabschnitt kann analog die gleichen Merkmale aufweisen wie der Verbindungsabschnitt des Kupplungskörpers. Insbesondere kann der Anschlussabschnitt für ein Anschließen an das Rohr bzw. das Aggregat ausgebildet oder bereits angeschlossen sein. Der Kupplungsabschnitt und der Anschlussabschnitt des Kupplungssteckers sind zweckmäßigerweise über einen Strömungskanal des Kupplungssteckers fluidisch miteinander verbunden. Der Kupplungsstecker kann gerade oder gewinkelt ausgebildet sein. Der Ausdruck "axial einwärtig" in Bezug auf den Kupplungsstecker meint die Richtung von dem Kupplungsabschnitt hin zu dem Anschlussabschnitt des Kupplungssteckers.

Es ist möglich, dass der Kupplungsstecker einen Flansch aufweist, wobei der Flansch vorzugsweise im vollständig eingeführten Zustand des Kupplungssteckers an dem erstem Körperende des Kupplungskörpers anschlägt. Das Verriegelungselement ragt bevorzugt gegenüber einer Außenseite des Kupplungsabschnitts nach radial außen vor. Das Verriegelungselement ist vorzugsweise als wenigstens teilweise und besonders vorzugsweise als vollständig umlaufender Bund ausgebildet. Das Verriegelungselement ist mit Vorteil im Kupplungsabschnitt des Kupplungssteckers angeordnet. Gemäß einer Ausführungsform kann das Verriegelungselement als wenigstens teilweise umlaufende Nut und vorzugsweise als vollständig umlaufende Nut ausgestaltet sein. Das Verriegelungselement unterteilt den Kupplungsabschnitt des Kupplungssteckers vorzugsweise in einen Zwischenabschnitt und in einen Dichtungsabschnitt. Der Zwischenabschnitt ist mit Vorteil zwischen dem Verriegelungselement und dem Anschlussabschnitt angeordnet. Der Dichtungsabschnitt ist in axialer Richtung zwischen dem Verriegelungselement und einem buchsenseitigen Ende des Kupplungssteckers befindlich.

Es ist bevorzugt, dass der Rücken der Steckersicherung in der eingerückten Stellung näher an der Mittenachse des Steckerabschnitts befindlich ist als in der ausgerückten Stellung. Der Rücken der Steckersicherung mag einer Decke des Kupplungskörpers zugeordnet sein. Die dem Rücken abgewandten Enden der Schenkel des Indikators sind vorzugsweise dem Boden des Kupplungskörpers zugeordnet und mögen insbesondere als bodenseitige Enden der Schenkel bezeichnet werden. Es ist bevorzugt, dass in einem Längsschnitt der Kupplungsbuchse der Indikator bzw. die Schenkel in der ausgerückten Stellung der Steckersicherung innerhalb des Kupplungskörpers wenigstens abschnittsweise in axialer Richtung und vorzugsweise nicht in Querrichtung beweglich ist/sind. Bevorzugtermaßen behalten die bodenseitigen Enden der Schenkel während der gesamten Dauer der Auslenkung durch den Kupplungsstecker ihren Abstand zueinander bei.

Gemäß einer sehr bevorzugten Ausführungsform ist/sind die Kupplungsbuchse bzw. der Kupplungskörper bzw. die Schenkel bzw. der Indikator so ausgebildet, dass die Schenkel in dem Kupplungskörper in einem Querschnitt in der ausgerückten Stellung durch den Kupplungsstecker nicht in einer Querrichtung auslenkbar sind. Gemäß einer Ausführungsform ist/sind der Kupplungskörper bzw. die Schenkel bzw. der Indikator so ausgestaltet, dass ein Auseinanderspreizen der Schenkel wenigstens zeitweise während der Einführung des Kupplungssteckers und bevorzugtermaßen vollständig während der Einführung des Kupplungssteckers unterbunden wird.

Es ist ganz besonders von Vorteil, dass der Indikator einen Verbindungssteg umfasst, wobei der Verbindungssteg - bezogen auf die Mittenachse des Steckerabschnitts während der ausgerückten und/oder der eingerückten Stellung - gegenüber dem Rücken angeordnet ist und die Schenkel miteinander verbindet. Hierdurch wird erreicht, dass ein besonders kompakter bzw. robuster Aufbau des Indikators geschaffen wird, welcher gleichzeitig nicht allzu massiv und damit verformungsunfreundlich ausfällt. Hierdurch wird im Ergebnis das Ziel erreicht, ein kraftvolles, automatisches Einziehen der Steckersicherung zu gewährleisten, während gleichzeitig eine relativ geringe Kraft auf den Kupplungsstecker beim Einführen in die Kupplungsbuchse aufgewendet werden muss. Im Ergebnis wird hierdurch eine Rastvorrichtung geschaffen, welche besonders kraftvoll und zuverlässig über einen langen Zeitraum hinweg funktioniert. Der Rücken der Steckersicherung bzw. des Indikators und die Schenkel bilden zweckmäßigerweise gemeinsam eine Steckeröffnung, durch welche der Kupplungsstecker in axialer Richtung im vollständig eingeführten Zustand hindurchragt. Bevorzugtermaßen bildet der Verbindungssteg gemeinsam mit den Schenkeln und dem Rücken einen vollständig umlaufenden Rand der Steckeröffnung.

Gemäß einer sehr bevorzugten Ausführungsform ist die Kupplungsbuchse so ausgebildet, dass bei einer Betätigung eines bodenseitigen Abschnitts des Indikators in axialer, bevorzugt axial einwärtiger Richtung die Steckersicherung von der eingerückten in die ausgerückte Stellung überführbar ist. Hierdurch wird ein besonders einfaches Betätigen der Steckersicherung zum Lösen derselben erreicht und die eingangs genannte Aufgabe der Bereitstellung eines nutzerfreundlichen Mechanismus zum Lösen der Fluidkupplung gelöst. Vorzugsweise ist die Kupplungsbuchse so ausgestaltet, dass bei einer Überführung der Steckersicherung von der eingerückten in die ausgerückte Stellung der Kupplungsstecker von der vollständig eingeführten Position in eine lediglich teilweise eingeführte Position geschoben wird. Hierdurch wird erreicht, dass dem Nutzer die Beendigung der Verriegelung verdeutlicht wird.

Gemäß einer sehr bevorzugten Ausführungsform umfasst ein bodenseitiges Ende der Steckersicherung bzw. des Indikators wenigstens ein Betätigungselement und bevorzugt zwei Betätigungselemente zum Überführen der Steckersicherung von der eingerückten Stellung in die ausgerückte Stellung. Vorzugsweise bildet das wenigstens eine Betätigungselement ein Ende eines der beiden Indikatorschenkel, wobei vorzugsweise jeweils ein Betätigungselement das Ende jeweils eines der beiden Schenkel bildet. Es ist sehr bevorzugt, dass das wenigstens eine Betätigungselement eine raue bzw. geriffelte Struktur zwecks besserer Handhabung aufweist. Besonders vorzugsweise ist die Kupplungsbuchse so ausgebildet bzw. ist das wenigstens eine Betätigungselement in der eingerückten Stellung der Steckersicherung so angeordnet, dass es mit der bloßen Hand erreicht und vorzugsweise in axialer Richtung, besonders vorzugsweise in axial einwärtiger Richtung betätigt werden kann.

Es ist sehr bevorzugt, dass die Schenkel des Indikators in einer Seitenansicht und der Einschubrichtung der Steckersicherung folgend nach axial außen gewinkelt und vorzugsweise gebogen sind. Hierdurch wird ein besonders kraftvoll wirkender Einzugsmechanismus erreicht und vorteilhafterweise die Steckersicherung in einer Seitenansicht in axialer Richtung relativ kompakt ausgebildet.

Mit Vorteil weist der Kupplungskörper wenigstens einen sich nach axial innen erstreckenden Vorsprung und vorzugsweise zwei sich nach axial innen erstreckende Vorsprünge auf, wobei bevorzugtermaßen der wenigstens eine Vorsprung in der eingerückten Stellung der Steckersicherung in einer Seitenansicht wenigstens teilweise in axialer Richtung durch den Indikator bzw. durch einen der Schenkel bzw. dem bodenseitigen Ende des Indikators hindurchragt. Vorzugsweise definiert der Vorsprung gemeinsam mit einer Aufnahme des Indikators die eingerückte Stellung der Steckersicherung. Es ist bevorzugt, dass der wenigstens eine Vorsprung an einer Stirnwand des ersten Körperendes angeordnet ist. Zweckmäßigerweise ist der wenigstens eine Vorsprung im Bereich des Bodens des Kupplungskörpers befindlich. Mit Vorteil ist jedem der beiden Schenkel ein Vorsprung des Kupplungskörpers zugeordnet. Besonders vorzugsweise ragt der wenigstens eine Vorsprung in der eingerückten Stellung der Steckersicherung in einer Seitenansicht in axialer Richtung vollständig durch den Indikator bzw. durch wenigstens einen der Schenkel hindurch. Vorzugsweise verjüngt sich der wenigstens eine Vorsprung in einer Seitenansicht in axial einwärtiger Richtung. Der Vorsprung umfasst mit Vorteil eine Rastschulter zum Verrasten mit dem Indikator bzw. mit einem der beiden Schenkel.

Es ist sehr bevorzugt, dass die Steckersicherung bzw. der Indikator in einer Vorderansicht wenigstens eine Aufnahme und vorzugsweise zwei Aufnahmen umfasst, wobei vorteilhafterweise die wenigstens eine Aufnahme ausgebildet ist, mit einem Element des Kupplungskörpers - vorzugsweise mit dem wenigstens einen Vorsprung - zu verrasten. Die wenigstens eine Aufnahme ist zweckmäßigerweise einem der beiden Schenkel zugeordnet. Mit Vorteil ist die wenigstens eine Aufnahme in einer bodenseitigen Hälfte bzw. einem bodenseitigen Drittel des Indikators angeordnet. Der Indikator umfasst vorzugsweise wenigstens ein Anschlusselement und bevorzugt zwei Anschlusselemente. Vorteilhafterweise wird ein bodenseitiges Ende der wenigstens einen Aufnahme durch ein Abschlusselement gebildet, welches die Steckersicherung vor einem unbeabsichtigten Herausziehen aus dem Kupplungskörper bewahrt. Vorteilhafterweise verjüngt sich das Abschlusselement in einer Seitenansicht in axial auswärtiger Richtung. Mit der Verjüngung des Vorsprungs in axial einwärtiger Richtung und der Verjüngung des Abschlusselementes in axial auswärtiger Richtung wird erreicht, dass die axiale Auslenkung des Indikators bzw. der Schenkel in eine radiale Einzugsbewegung umgewandelt werden kann. Es ist besonders bevorzugt, dass der wenigstens eine Vorsprung in einer Seitenansicht an seiner radialen Außenseite eine Einzugsrampe aufweist. Die Einzugsrampe ist bevorzugtermaßen so ausgebildet, dass der Indikator bzw. der Schenkel bzw. das Abschlusselement in einer Seitenansicht an der Einzugsrampe entlanggleiten kann, so dass eine axiale Spannung des Indikators in eine radial einwärtige oder auswärtige Bewegung umgewandelt wird.

Es ist ganz besonders bevorzugt, dass der Boden des Kupplungskörpers wenigstens eine Bodenöffnung und vorzugsweise zwei Bodenöffnungen aufweist. Mit Vorteil ist die Kupplungsbuchse bzw. der Kupplungskörper bzw. der Indikator so ausgebildet, dass die Schenkel in einer Seitenansicht während des Übergangs von der ausgerückten in die eingerückte Stellung wenigstens abschnittsweise durch die wenigstens eine Bodenöffnung hindurchgleiten. Die wenigstens eine Bodenöffnung ist vorzugsweise dadurch definiert, dass eine gedachte Linie ausgehend von einer axial einwärtigen Spitze des wenigstens einen Vorsprungs in der Seitenansicht in axial einwärtiger Richtung gezogen wird. Zweckmäßigerweise ist die wenigstens eine Bodenöffnung in einer Seitenansicht axial einwärts von dem wenigstens einen Vorsprung angeordnet. Vorzugsweise ragt der Indikator nur zeitweise während des Übergangs von der ausgerückten in die eingerückte Stellung durch die Bodenöffnung hindurch. Mit Hilfe der Bodenöffnung wird erreicht, dass ein Nutzer den Indikator bzw. die Betätigungselemente zum Überführen der Steckersicherung von der eingerückten in die ausgerückte Stellung betätigen kann.

Vorzugsweise ist ein Abschnitt des Indikators bzw. der Schenkel in einer Seitenansicht bzw. in einem Längsschnitt in der ausgerückten Stellung in einer radialen Richtung zwischen dem Boden bzw. dem wenigstens einen Vorsprung und dem Rückhalter bzw. einem Halteabschnitt des Rückhalters befindlich. Hierdurch wird ein kompakter Aufbau der Kupplungsbuchse erzielt. Vorzugsweise überlappen sich der Rückhalter bzw. der Halteabschnitt und ein bodenseitiges Ende des Indikators bzw. der Schenkel bzw. die Abschlusselemente in axialer Richtung. Es ist sehr bevorzugt, dass in einem Längsschnitt wenigstens ein rückenseitiger Abschnitt des Indikators bzw. der Schenkel axial einwärts gegenüber dem Rückhalter bzw. dem Halteabschnitt angeordnet ist. Besonders vorzugsweise ist in einem rückenseitigen Abschnitt der Steckersicherung in einem Längsschnitt bzw. in einer Seitenansicht zwischen dem Rückhalter und dem Indikator ein Aufnahmeraum zur Aufnahme des Verriegelungselementes des Kupplungssteckers angeordnet.

Gemäß einer bevorzugten Ausführungsform weist der Indikator eine Berührungsfläche zur direkten oder indirekten und vorzugsweise zur direkten Berührung des Kupplungssteckers auf. Mit Vorteil ist die Kupplungsbuchse bzw. die Steckersicherung bzw. der Indikator so ausgebildet, dass die Berührungsfläche während der ausgerückten Stellung der Steckersicherung - bezogen auf die Mittenachse des Steckerabschnitts - gegenüber dem Rücken des Indikators angeordnet ist. Hierdurch wird erreicht, dass die axiale Auslenkung durch das Verriegelungselement des Kupplungssteckers eine Kraft auf die Steckersicherung in Richtung des Bodens bewirkt, so dass der Übergang von der ausgerückten in die eingerückte Stellung - insbesondere an dem Übergangspunkt - erzeugt wird.

Vorzugsweise ist ein Übergangspunkt der Übergangsbewegung der Steckersicherung von der ausgerückten Stellung in die eingerückte Stellung dadurch definiert, dass ein axial einwärtiges Ende des wenigstens einen Vorsprungs mit einem axial auswärtigen Ende des bodenseitigen Abschnitts des Indikators bzw. des wenigstens einen Abschlusselementes in Kontakt tritt. Die Berührungsfläche kann beispielsweise von einer, zwei oder mehreren Kontaktrampen des Indikators gebildet werden. Es ist bevorzugt, dass die Kupplungsbuchse so ausgebildet ist, dass der Kupplungsstecker bei einer Einführung in die Kupplungsbuchse mit seinem Verriegelungselement, vorzugsweise mit einem wenigstens teilweise umlaufenden Bund, in Kontakt mit der Berührungsfläche des Indikators bzw. mit der wenigstens einen Kontaktrampe tritt. Die Berührungsfläche ist mit Vorteil so ausgebildet, dass während des Einführens des Kupplungssteckers in die Kupplungsbuchse der Indikator zunächst nach axial einwärts ausgelenkt wird und am Ende der axialen Auslenkung am Übergangspunkt eine Kraft auf die Steckersicherung hin zu dem Boden des Kupplungskörpers ausübt.

Mit Vorteil ist die Kupplungsbuchse so ausgebildet, dass die Steckersicherung in der ausgerückten Stellung mit wenigstens einer Stoßfläche und vorzugsweise mit zwei Stoßflächen an wenigstens einer Anschlagfläche bzw. jeweils an einer Anschlagfläche des Kupplungskörpers anschlägt/anschlagen, so dass vorzugsweise die wenigstens eine Stoßfläche und die wenigstens eine Anschlagfläche die ausgerückte Stellung der Steckersicherung definieren bzw. mitdefinieren. Vorzugsweise wird die wenigstens eine Stoßfläche von einer bodenseitigen Oberfläche des wenigstens einen Abschlusselementes gebildet. Mit Vorteil wird die wenigstens eine Anschlagfläche von einer deckenseitigen Fläche des wenigstens einen Vorsprungs gebildet.

Bevorzugtermaßen umfasst der Rückhalter zwei Arme. Es ist zweckmäßig, dass der Rückhalter einen Halteabschnitt aufweist. Vorzugsweise wird der Halteabschnitt von einem deckenseitigen Abschnitt des Rückhalters gebildet. Der Rückhalter ist in einer Seitenansicht zweckmäßigerweise wenigstens abschnittsweise axial auswärts gegenüber dem Indikator in einer Seitenansicht angeordnet.

Vorzugsweise umfasst die Steckersicherung bzw. der Rückhalter bzw. wenigstens einer der beiden Arme ein Rastelement zum Einrasten in den Kupplungskörper, wobei bevorzugtermaßen das wenigstens eine Rastelement mit einem komplementären Rastteil des Kupplungskörpers wechselwirkt, so dass die Steckersicherung in der ausgerückten Stellung in dem Kupplungskörper gehalten bzw. verrastet ist. Vorzugsweise verhindern das wenigstens eine Rastelement und das wenigstens eine Rastteil eine radiale Bewegung der Steckersicherung in Richtung der Decke des Kupplungskörpers.

Vorteilhafterweise ist die Kupplungsbuchse so ausgebildet, dass die ausgerückte Stellung und/oder die eingerückte Stellung der Steckersicherung mit bloßem Auge und/oder mittels eines maschinenlesbaren Symbols und/oder mittels eines elektronischen Senders verifizierbar ist/sind. Mit Vorteil umfasst die Steckersicherung einen Durchbruch zur Verifizierung der eingerückten Stellung der Steckersicherung mit bloßem Auge. Es ist bevorzugt, dass der Kupplungskörper eine Wandöffnung zur Verifizierung der eingerückten Stellung der Steckersicherung mit bloßem Auge umfasst. Besonders vorzugsweise korrespondieren die Wandöffnung des Kupplungskörpers und ein Durchbruch der Steckersicherung, wobei vorteilhafterweise die Wandöffnung mit dem Durchbruch in der eingerückten Stellung stärker korrespondiert im Vergleich zur ausgerückten Stellung. Es ist bevorzugt, dass ein Flansch bzw. der Flansch des Kupplungssteckers am ersten Körperende des Kupplungskörpers bzw. an dem Kupplungskörper anliegt, wenn der Kupplungsstecker vollständig in die Kupplungsbuchse eingeführt ist. Das maschinenlesbare Symbol kann insbesondere ein Strichcode oder ein QR-Code sein. Ein Beispiel des elektronischen Senders ist ein RFID-Sender, welcher eine Stellungsänderung des Indikators bzw. der Steckersicherung feststellt. Die Stellungsänderung kann den Übergang von der ausgerückten Stellung in die eingerückte Stellung der Steckersicherung und/oder den Übergang von der eingerückten Stellung in die ausgerückte Stellung umfassen.

Die eingangs genannte Aufgabe wird vorzugsweise gelöst durch eine teilautomatische Fluidkupplung, umfassend eine erfindungsgemäße Kupplungsbuchse und einen Kupplungsstecker, wobei der Kupplungsstecker ein Verriegelungselement zum Verriegeln der Kupplungsbuchse aufweist.

Die eingangs genannte Aufgabe wird mit Vorteil gelöst durch eine Verwendung der erfindungsgemäßen Kupplungsbuchse bzw. der erfindungsgemäßen Fluidkupplung in einem Landfahrzeug insbesondere in einem Straßenfahrzeug. Im Falle des Straßenfahrzeugs handelt es sich vorzugsweise um einen Personenkraftwagen oder um einen Lastkraftwagen. Es ist besonders bevorzugt, dass die Kupplungsbuchse in einem Personenkraftwagen und insbesondere in einem Elektrofahrzeug eingesetzt wird. Weiter vorzugsweise ist die Kupplungsbuchse Bestandteil eines Kühlkreislaufs für eine Batterie des Elektrofahrzeugs.

Die Erfindung wird nachfolgend anhand eines Ausführungsbeispiels mit Hilfe von mehreren schematisch gehaltenen Figuren erläutert. Es zeigen
- Fig. 1: eine perspektivische Ansicht einer erfindungsgemäßen Fluidkupplung umfassend eine erfindungsgemäße Kupplungsbuchse sowie einen Kupplungsstecker,
- Fig. 2A: eine erste perspektivische Ansicht einer Steckersicherung der Kupplungsbuchse aus Fig. 1,
- Fig. 2B: eine zweite perspektivische Ansicht der Steckersicherung aus Fig. 2A,
- Fig. 3A: einen ersten Längsschnitt durch die Fluidkupplung aus Fig. 1,
- Fig. 3B: einen zweiten Längsschnitt durch die Fluidkupplung aus Fig. 1 mit der Steckersicherung in einer eingerückten Stellung,
- Fig. 3C: den Längsschnitt aus Fig. 3B, wobei sich die Steckersicherung in einer ausgerückten Stellung befindet,
- Fig. 4A: einen ersten Querschnitt durch die Fluidkupplung aus Fig. 1 mit der Steckersicherung in einer eingerückten Stellung,
- Fig. 4B: einen zweiten Querschnitt durch die Fluidkupplung aus Fig. 1 mit der Steckersicherung in einer eingerückten Stellung und
- Fig. 4C: den Querschnitt aus Fig. 4B, wobei sich die Steckersicherung in der ausgerückten Stellung nach Fig. 3C befindet.

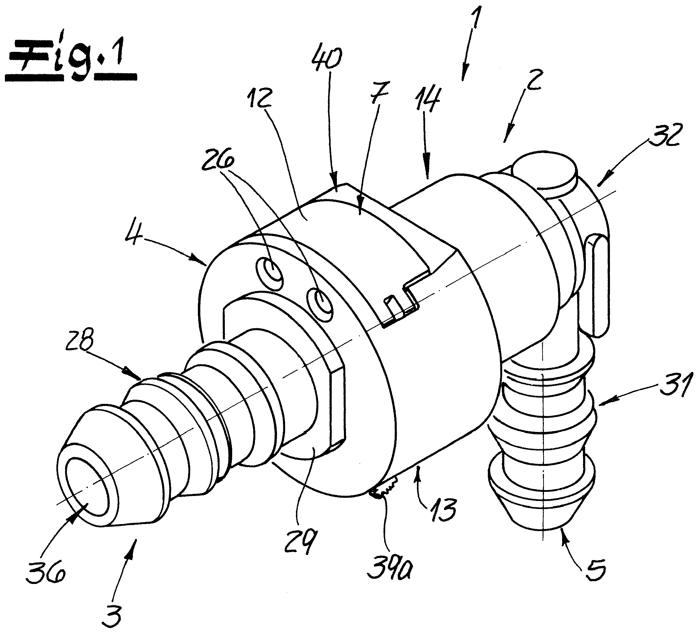

Fig. 1 zeigt eine Fluidkupplung 1, 3 umfassend eine Kupplungsbuchse 1 sowie einen Kupplungsstecker 3. Der Kupplungsstecker 3 mag einen Anschlussabschnitt 28 aufweisen, welcher zum Anschluss an ein Rohr oder eine sonstige Komponente ausgebildet ist. Bei einer sonstigen Komponente kann es sich beispielsweise um Pumpen, Düsen, Tanks und dergleichen mehr handeln. Im Falle einer sonstigen Komponente ist der Anschlussabschnitt 28 des Kupplungssteckers 3 vorzugsweise integral bzw. stoffschlüssig mit der sonstigen Komponente verbunden. Im Falle des Anschlusses eines Rohrs kann der Anschlussabschnitt 28 an seinem Umfang angeordnete, umlaufende Rippen - etwa gemäß Fig. 1 - zum Einstecken in das Rohr aufweisen. In anderen, hier nicht dargestellten Ausführungsbeispielen kann der Anschlussabschnitt 28 als Rohraufnahme ausgebildet sein, so dass das Rohr in den Anschlussabschnitt 28 einsteckbar ist und beispielsweise mittels Schweißung, insbesondere Laserschweißung, mit dem Kupplungsstecker 3 verbunden werden kann. Der Kupplungsstecker 3 kann einen Flansch 29 umfassen, welcher in einem gänzlich eingesteckten Zustand des Kupplungssteckers 3 in der Kupplungsbuchse 1 an der Kupplungsbuchse 1 anschlägt.

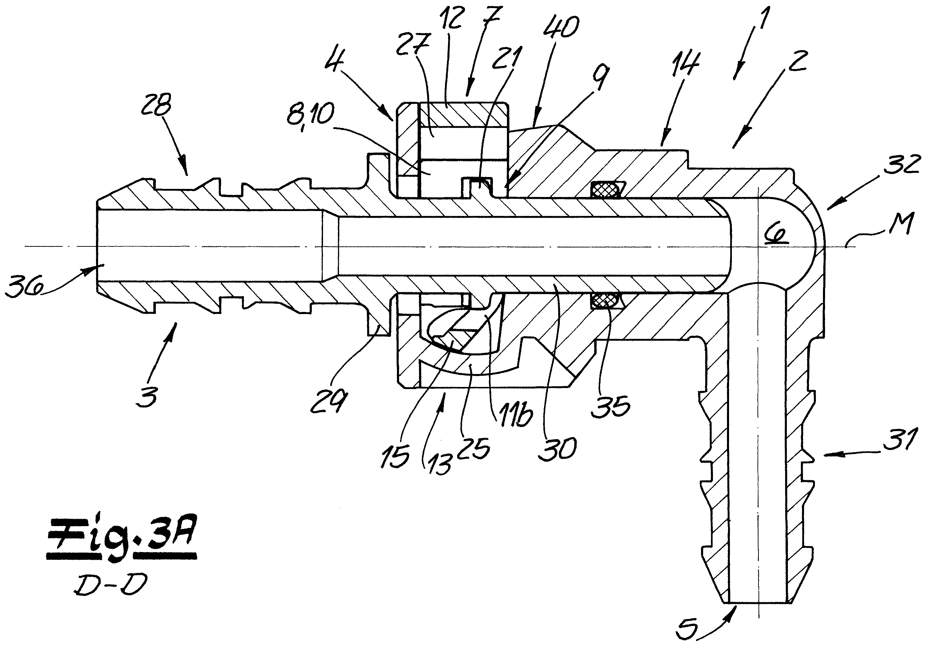

In Fig. 3A ist der Kupplungsstecker 3 in einem Längsschnitt abgebildet. Der Kupplungsstecker 3 ist in diesem Ausführungsbeispiel mit Ausnahme des Flansches 29 vollständig rotationssymmetrisch ausgebildet. Der Kupplungsstecker 3 umfasst ein Verriegelungselement 21, welches als umlaufender Bund ausgebildet sein kann. In hier nicht dargestellten Ausführungsbeispielen kann das Verriegelungselement jedoch auch als umlaufende Nut gestaltet sein. Der Flansch 29 und das Verriegelungselement 21 mögen zwischen sich einen Zwischenabschnitt des Kupplungssteckers 3 definieren. Zweckmäßigerweise umfasst der Kupplungsstecker 3 einen in den Kupplungskörper 2 einführbaren Kupplungsabschnitt 30. Auf den Verriegelungsvorgang zwischen Kupplungsstecker 3 und Kupplungsbuchse 1 wird nachfolgend noch genauer eingegangen. Der Anschlussabschnitt 28 und der Kupplungsabschnitt 30 des Kupplungssteckers 3 sind zweckmäßigerweise über einen Strömungskanal 36 des Kupplungssteckers 3 fluidisch miteinander verbunden.

Gemäß Fig. 1 umfasst die Kupplungsbuchse 1 einen Kupplungskörper 2, welcher in diesem Ausführungsbeispiel einstückig und vorzugsweise integral per Spritzguss ausgebildet ist. Der Kupplungskörper 2 erstreckt sich von einem ersten Körperende 4 hin zu einem zweiten Körperende 5, wobei das erste Körperende 4 dem Kupplungsstecker 3 zugeordnet ist. Der Kupplungskörper 2 umfasst vorzugsweise einen Steckerabschnitt 14, welcher den Kupplungsstecker 3 aufnimmt. Der Kupplungskörper 2 weist mit Vorteil einen Verbindungsabschnitt 31 auf, welcher beispielsweise mit einem weiteren, hier nicht dargestellten Rohr oder mit einem weiteren, hier nicht dargestellten Aggregat verbunden werden kann bzw. verbunden ist. Im Falle der Kupplungsbuchse 1 kann es sich bei dem mit der Kupplungsbuchse 1 verbindbaren oder verbundenen Aggregat um eine Pumpe, Düse, einen Tank oder dergleichen handeln. Der Verbindungsabschnitt 31 mag reversibel, beispielsweise per Presssitz oder irreversibel mit dem Aggregat, beispielsweise per Schweißung oder per Spritzguss, verbunden sein.

Es ist bevorzugt, dass der Verbindungsabschnitt 31 zur Verbindung mit einem weiteren, hier nicht dargestellten Rohr ausgestaltet ist. Der Verbindungsabschnitt 31 kann zum Einstecken in das oder Aufstecken auf das weitere Rohr - analog zum Kupplungsstecker 3 - ausgebildet sein. In diesem, in Fig. 1 abgebildeten Ausführungsbeispiel ist der Verbindungsabschnitt 31 der Kupplungsbuchse 1 mit umlaufenden, äußeren Rippen versehen, welche einen sicheren Sitz eines hier nicht dargestellten, weiteren Rohrs auf den Verbindungsabschnitt 31 gewährleisten.

Die Kupplungsbuchse 1 dieses Ausführungsbeispiels mag einen Übergangsabschnitt 32 zwischen dem Verbindungsabschnitt 31 und dem Steckerabschnitt 14 aufweisen. Die Kupplungsbuchse 1 kann, wie in Fig. 1 abgebildet, gewinkelt ausgebildet sein, so dass der Verbindungsabschnitt 31 und der Steckerabschnitt 14 beispielsweise um 90° zueinander gewinkelt sind. Es ist möglich, dass der Übergangsabschnitt 32 ein bzw. der Winkelabschnitt der Kupplungsbuchse 1 ist. In einer anderen, hier nicht dargestellten Ausführungsform ist die Kupplungsbuchse 1 nicht gewinkelt, so dass der Steckerabschnitt 14 und der Verbindungsabschnitt 31 keinen Winkel zwischen sich einschließen und der Übergangsabschnitt entfallen kann.

In Fig. 3A ist erkennbar, dass sich ein Fluidkanal 6 von dem ersten Körperende 4 zu dem zweiten Körperende 5 erstreckt. Aufgrund der zylindrischen Fläche des Kupplungsabschnitts 30 des Kupplungssteckers 3 weist der Steckerabschnitt 14 der Kupplungsbuchse 1 eine entsprechende, hohlzylindrische Innenwand auf. Die hohlzylindrische Innenwand des Steckerabschnitts 14 definiert eine Mittenachse M und damit eine axiale, eine radiale sowie eine Umlaufrichtung des Steckerabschnitts 14 der Kupplungsbuchse 1. Aufgrund der Winkelung der Kupplungsbuchse 1 ist die Mittenachse M nicht identisch mit einer Längsachse des Verbindungsabschnitts 31. Nachfolgende, auf die jeweiligen Achsen bezogene Richtungsangaben sind zweckmäßigerweise stets auf den entsprechenden Abschnitt der Kupplungsbuchse 1 bezogen.

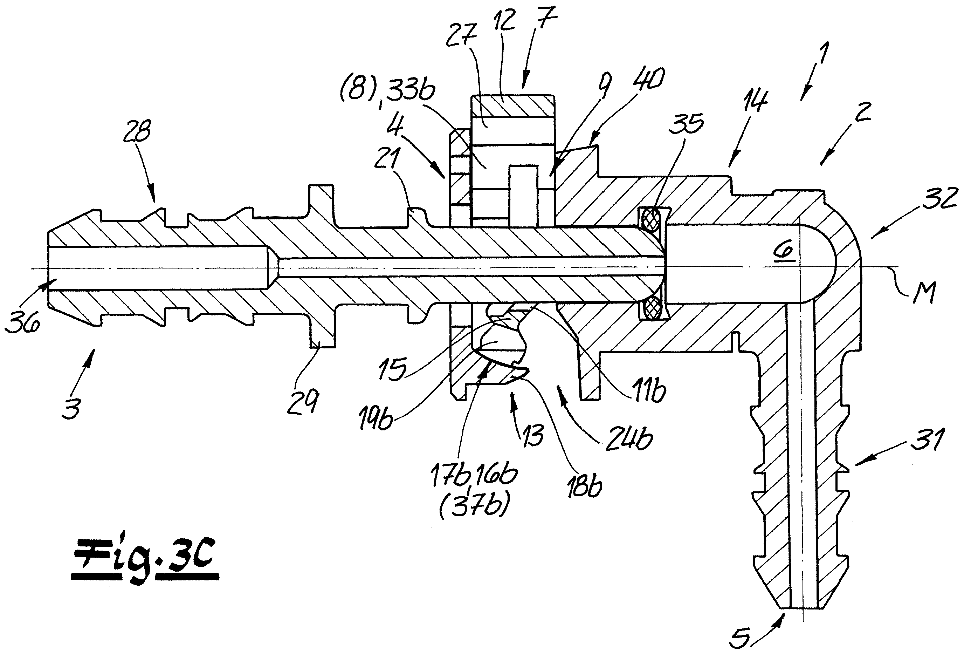

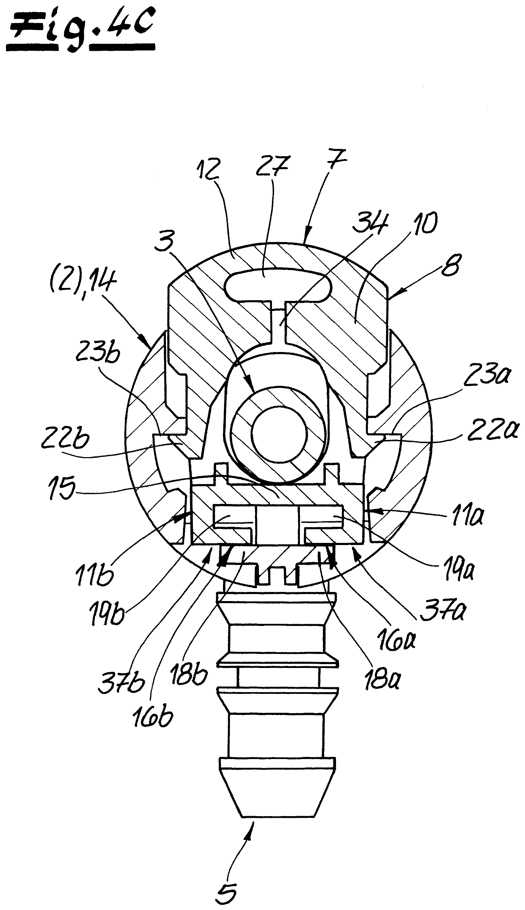

Die Kupplungsbuchse gemäß Fig. 1 umfasst neben dem Kupplungskörper 2 eine Steckersicherung 7. Die Steckersicherung 7 und die Kupplungsbuchse 1 sind vorzugsweise so ausgebildet, dass die Steckersicherung 7 in Fig. 1 in einer Seitenansicht von oben kommend und damit in radialer Richtung bzw. in Einschubrichtung in die Kupplungsbuchse 1 einführbar ist. Mit Vorteil kann die Steckersicherung 7 innerhalb der Kupplungsbuchse 1 eine eingerückte Position einnehmen, wie sie in Fig. 1 ersichtlich ist. Besonders bevorzugtermaßen kann die Steckersicherung 7 in der Kupplungsbuchse 1 eine ausgerückte Position einnehmen, s. Fig. 3C und 4C. Es ist bevorzugt, dass die Steckersicherung 7 mittels manuellem Druck von einer Position gänzlich außerhalb des Kupplungskörpers 2 in die ausgerückte Position überführt werden kann. Mit Vorteil ist die Steckersicherung 7 in der ausgerückten Position in der Kupplungsbuchse 1 verrastet bzw. nimmt dort eine definierte Position ein. Erfindungsgemäß sind die Kupplungsbuchse 1 und die Steckersicherung 7 so ausgebildet, dass bei einem vollständigen Einführen des Kupplungssteckers 3 in die Kupplungsbuchse 1 die Steckersicherung 7 automatisch von der ausgerückten Position nach Fig. 3C und 4C in die eingerückte Position gemäß der Fig. 1, 3A, 3B, 4A und 4B überführt wird.

Erfindungsgemäß umfasst die Steckersicherung 7 nach Fig. 1 einen Rücken 12, durch welchen vorzugsweise mittels manuellem Druck die Steckersicherung 7 von außerhalb der Kupplungsbuchse 1 in die ausgerückte Position gebracht wird. Der Rücken 12 ist im eingerückten Zustand zweckmäßigerweise einer Decke 40 des Kupplungskörpers 2 zugeordnet. Der Rücken 12 der Steckersicherung 7 ist mit Vorteil so ausgebildet, dass er wenigstens abschnittsweise mit einer Oberfläche des Kupplungskörpers 2 fluchtet. Dies ermöglicht eine erste visuelle Kontrolle der vollständigen Kupplung zwischen Kupplungsbuchse 1 und Kupplungsstecker 3 Eine zweite visuelle Kontrolle ermöglicht der Flansch 29, welcher in diesem Ausführungsbeispiel mit seinem Anschlag an die Kupplungsbuchse 1 eine vollständige Einführung des Kupplungssteckers 3 anzeigt. Vorzugsweise umfasst der Kupplungskörper 2 wenigstens eine Wandöffnung 26 und vorzugsweise zwei Wandöffnungen 26. Die Wandöffnungen 26 ermöglichen eine dritte visuelle Kontrolle der vollständigen Einführung des Kupplungssteckers 3 bzw. der Steckersicherung 7.

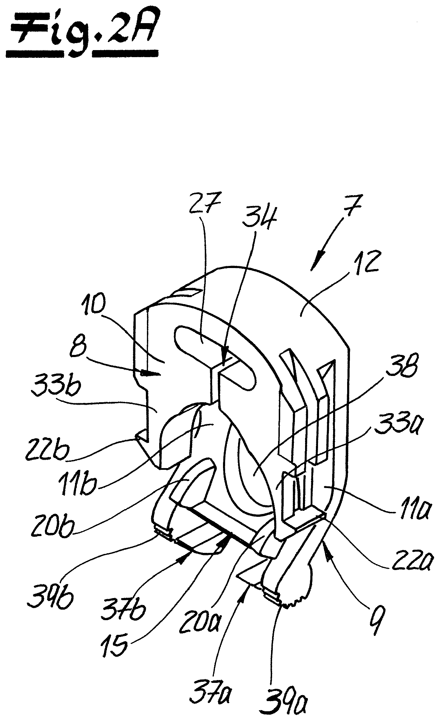

In Fig. 2A ist erkennbar, dass die Steckersicherung 7 einen Rückhalter 8 sowie einen Indikator 9 aufweist, wobei die Steckersicherung 7 vorzugsweise einstückig, besonders vorzugsweise integral per Spritzguss hergestellt ist. Der Rückhalter 8 umfasst zweckmäßigerweise einen Halteabschnitt 10, welcher in diesem Ausführungsbeispiel das Verriegelungselement 21 des Kupplungssteckers 3 im vollständig eingeführten Zustand in der Kupplungsbuchse 1 hintergreift und so den Kupplungsstecker 3 in der Kupplungsbuchse 1 sichert. Der Rückhalter 8 dieses Ausführungsbeispiels umfasst zwei Arme 33a, 33b, wobei jedem der beiden Arme 33a, 33b jeweils ein Rastelement 22a bzw. 22b des Kupplungskörpers 2 zugeordnet ist. In diesem Ausführungsbeispiel verrasten die Rastelemente 22a, 22b mit entsprechenden Rastteilen 23a bzw. 23b (s. Fig. 4C) des Kupplungskörpers 2 und sichern so die Steckersicherung 7 in der ausgerückten Position in der Kupplungsbuchse 1.

Der Indikator 9 umfasst gemäß Fig. 2A zwei Schenkel 11a, 11b, wobei sich die Schenkel 11a und 11b von dem Rücken 12 nach unten bzw. in radialer Richtung bzw. in Einschubrichtung erstrecken. Zweckmäßigerweise sind die Schenkel 11a und 11b in einem rückennahen Abschnitt axial weiter einwärts angeordnet im Vergleich zu den Armen 33a, 33b; vgl. Fig. 3A. Mit Vorteil bilden die Schenkel 11a und 11b zwischen sich und dem jeweils zugehörigen Arm 33a bzw. 33b in axialer Richtung eine Lücke aus, in welcher das Verriegelungselement 21 des Kupplungssteckers 3 im vollständig eingeführten Zustand in der Kupplungsbuchse 1 aufnehmbar ist. In dem eingerückten Zustand der Steckersicherung 7 sind die dem Rücken 12 abgewandten Enden der Schenkel 11a, 11b an einem Boden 13 (s. Fig. 1) der Kupplungsbuchse 1 angeordnet. Vorzugsweise weisen die Schenkel 11a, 11b an ihren bodenseitigen Enden Stoßflächen 16a bzw. 16b auf. Mit Vorteil umfasst jeder der beiden Schenkel 11a, 11b eine Kontaktrampe 20a bzw. 20b zur Kontaktierung des Verriegelungselements 21 des Kupplungssteckers 3.

Die beiden Schenkel 11a und 11b sind besonders vorzugsweise miteinander über einen Verbindungssteg 15 verbunden. Der Verbindungssteg 15 dieses Ausführungsbeispiels ist mit Vorteil zwischen den beiden Kontaktrampen 20a bzw. 20b angeordnet. Der Verbindungssteg 15 des Indikators 9 führt dazu, dass die beiden Schenkel 11a und 11b zueinander starr ausgebildet sind und insbesondere nicht auseinandergespreizt werden können. Im Gegensatz hierzu ist der Rückhalter 8 vorzugsweise spreizbar ausgestaltet, um insbesondere die Rastfunktion mittels der Rastelemente 22a, 22b zu gewährleisten. Mit Vorteil weist die Steckersicherung 7 bzw. der Rückhalter 8 hierzu einen Spalt 34 auf.

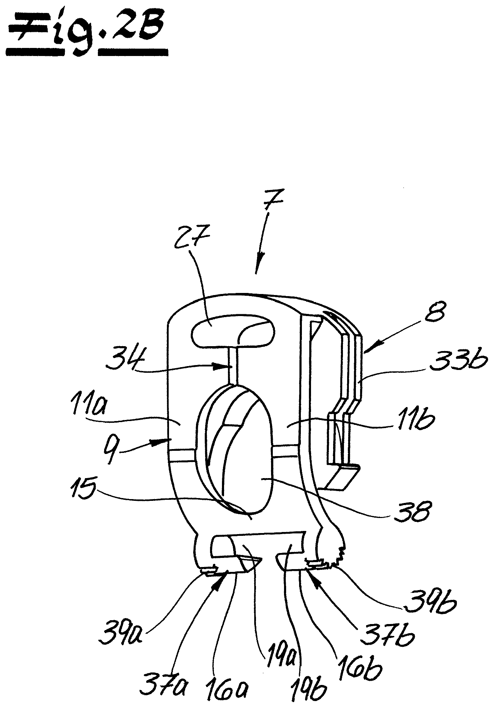

In Fig. 2B ist erkennbar, dass die Schenkel 11a und 11b vorzugsweise mit dem Verbindungssteg 15 und den Stoßflächen 16a und 16b Aufnahmen 19a bzw. 19b definieren. Bevorzugtermaßen umfasst die Steckersicherung 7 einen Durchbruch 27. Der Durchbruch 27 dieses Ausführungsbeispiels korrespondiert mit den Wandöffnungen 26 aus Fig. 1. Der Indikator 9 umfasst zweckmäßigerweise eine Steckeröffnung 38 zur Aufnahme des Kupplungssteckers 3 und ist bevorzugtermaßen in einer Vorderansicht in Einschubrichtung länger als in der hierzu orthogonalen Richtung. Es ist bevorzugt, dass der Spalt 34 die Steckeröffnung 38 mit dem Durchmesser 27 verbindet, um eine leichtgängige Sperrung der Arme 33a, 33b zu gewährleisten. Vorzugsweise umfasst jeder der Schenkel 11a, 11b an einem bodenseitigen Ende ein Abschlusselement 37a, 37b. Mit Vorteil weisen die Abschlusselemente 37a, 37b an ihren bodenseitigen Enden jeweils ein Betätigungselement 39a, 39b auf. Die Betätigungselemente 39a, 39b umfassen bevorzugtermaßen jeweils eine raue bzw. geriffelte Struktur zwecks manueller Bedienung.

In Fig. 3A ist die Fluidkupplung 1, 3 aus Fig. 1 im Längsschnitt durch die Mittenachse M dargestellt, wobei sich die Steckersicherung 7 im eingerückten Zustand befindet, während und weil der Kupplungsstecker 3 vollständig in die Kupplungsbuchse 1 eingeschoben ist. Dies ist insbesondere daran erkennbar, dass ein oberer Abschnitt des Verriegelungselements 21 des Kupplungssteckers 3 zwischen dem Rückhalter 8 und dem Indikator 9 angeordnet ist. Durch die so definierte Position korrespondiert der Kupplungsabschnitt 30 des Kupplungssteckers 3 zweckmäßigerweise mit einer Dichtung 35 der Kupplungsbuchse 1. Die Dichtung 35 dieses Ausgangsbeispiels umfasst einen Dichtungsring.

Es ist bevorzugt, dass der Kupplungskörper 2 einen Steg 25 umfasst. Der Steg 25 ist mit Vorteil am Boden 13 des Steckerabschnitts 14 des Kupplungskörpers 2 angeordnet. In Fig. 3A ist erkennbar, dass mit Vorteil der Verbindungssteg 15 des Indikators 9 im eingerückten Zustand der Steckersicherung 7 an dem Steg 25 anschlägt. Der Rückhalter 8 und/oder der Indikator 9 liegen vorzugsweise in der eingerückten Stellung der Steckersicherung 7 an einem rückenseitigen Abschnitt des Kupplungssteckers 3 an. Die Längsausdehnung des Stegs 25 erstreckt sich bevorzugtermaßen in überwiegend axialer Richtung. Mit Vorteil begrenzt der Steg 25 die Bodenöffnungen 24a, 24b bzw. unterteilt die Bodenöffnungen 24a, 24b.

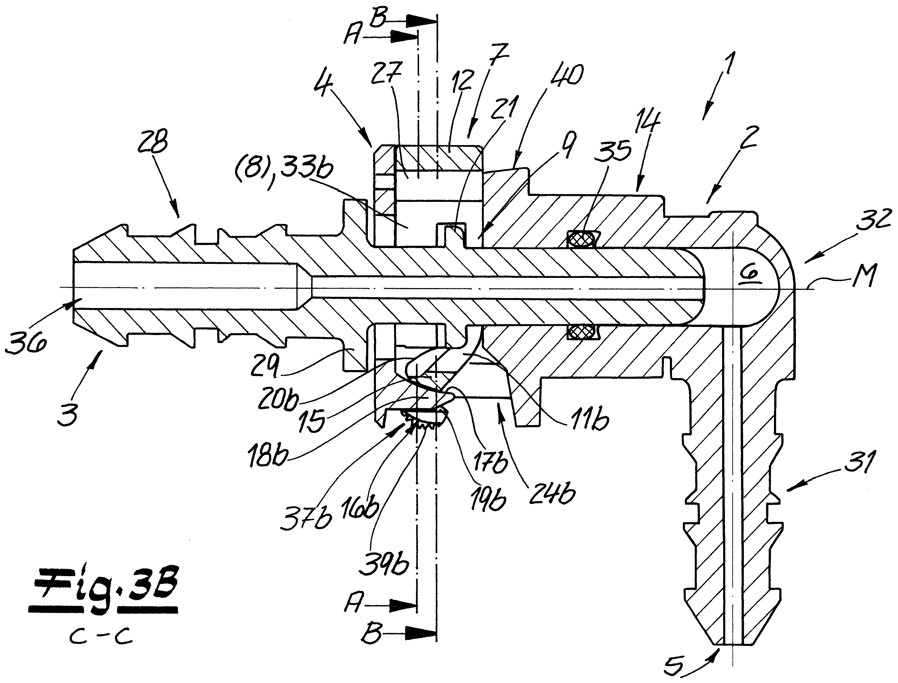

In Fig. 3B wurde der Längsschnitt so gewählt, dass er parallel zu denjenigen aus Fig. 3A ist und durch den Schenkel 11b verläuft. Mit Vorteil korrespondiert die Wandöffnung 26 des Kupplungskörpers 2 mit dem Durchbruch 27 der Steckersicherung 7, wenn die Steckersicherung 7 sich in der eingerückten Stellung befindet. Dies ermöglicht eine (dritte) visuelle Kontrolle des eingerückten Zustands der Steckersicherung 7 bzw. der vollständigen Einführung des Kupplungssteckers 3. Besonders vorzugsweise umfasst die Kupplungsbuchse 1 wenigstens einen und besonders bevorzugt zwei Vorsprünge 18a, 18b. Der Längsschnitt der Fig. 3B verläuft durch den Vorsprung 18b sowie durch den Verbindungssteg 15 und die Stoßfläche 16b. Es ist sehr bevorzugt, dass wenigstens einer der beiden Schenkel 11a, 11b und vorzugsweise beide Schenkel 11a, 11b eine Aufnahme 19a bzw. 19b aufweisen. Besonders vorzugsweise greift der Vorsprung 18b des Kupplungskörpers 2 in einem eingerückten Zustand der Steckersicherung 7 in die Aufnahme 19b ein und definiert zweckmäßigerweise den eingerückten Zustand der Steckersicherung 7.

Der Boden 13 des Kupplungskörpers 2 umfasst vorzugsweise wenigstens eine und vorzugsweise zwei Bodenöffnungen 24a, 24b. Zweckmäßigerweise ist die Bodenöffnung 24b dem Vorsprung 18b bzw. dem Schenkel 11b zugeordnet. Die wenigstens eine Bodenöffnung 24a, 24b bzw. die Bodenöffnungen 24a und 24b ermöglichen die Überführung der Steckersicherung 7 von dem ausgerückten in den eingerückten Zustand. Während vorteilhafterweise im ausgerückten Zustand die Steckersicherung 7 mit ihrer Stoßfläche 16b an einer dem Rücken 12 zugewandten Oberfläche des Vorsprungs 18b anstößt, befindet sich der Vorsprung 18b des Kupplungskörpers nach der Überführung der Steckersicherung 7 in die eingerückte Stellung in der Aufnahme 19b des Schenkels 11b. Vorzugsweise umfasst die Kupplungsbuchse einen hier nicht abgebildeten elektronischen Sender, insbesondere einen RFID-Sender. Es ist bevorzugt, dass der elektronische Sender den Übergang von der eingerückten in die ausgerückte Stellung - mit Vorteil auch umgekehrt - erfasst und dass der so erfasste Übergang mit einem Lesegerät detektierbar ist.

In Fig. 3C befindet sich die Steckersicherung 7 - noch - in dem ausgerückten Zustand, während der Kupplungsstecker 3 bereits teilweise eingeführt wurde. Insbesondere ist zu erkennen, dass das Verriegelungselement 21 des Kupplungssteckers 3 noch nicht den Zwischenraum zwischen dem Rückhalter 8 und dem Indikator 9 erreicht hat. Ebenso wenig hat der Kupplungsabschnitt 30 des Kupplungssteckers 3 die Dichtung 35 erreicht. Folglich liegt im in Fig. 3C gezeigten Zustand der Fluidkupplung 1, 3 weder eine mechanische Sicherung, noch eine fluidische Abdichtung vor. Es ist bevorzugt, dass die Steckersicherung 7 mit dem wenigstens einen Abschlusselement 37a, 37b bzw. mit der wenigstens einen Stoßfläche 16a, 16b an dem wenigstens einen Vorsprung 18a, 18b bzw. an der wenigstens einen Anschlagfläche 17a, 17b anliegt bzw. anschlägt. Hierdurch wird erreicht, dass die Steckersicherung 7 nicht fälschlicherweise noch in der ausgerückten Stellung per manuellem Druck auf den Rücken 12 in die eingerückte Stellung überführt werden kann.

Um die Steckersicherung 7 von der ausgerückten Stellung nach Fig. 3C in die eingerückte Stellung nach Fig. 3B zu überführen, muss bevorzugtermaßen der Kupplungsstecker 3 in die Kupplungsbuchse 1 vollständig eingeführt werden. Während der Einführung des Kupplungssteckers 3 berührt das Verriegelungselement 21 vorzugsweise die wenigstens eine Kontaktrampe 20a, 20b, wodurch die Schenkel 11a, 11b elastisch nach axial einwärts ausgelenkt werden. Durch diese Auslenkung wird eine elastische, mechanische Spannung in der Steckersicherung 7 bzw. im Indikator 9 aufgebaut, bis die Abschlusselemente 37a, 37b die Bodenöffnungen 24a, 24b erreichen. Sobald eine ausreichende axiale Auslenkung der Schenkel 11a, 11b erreicht wurde, berühren eine axial auswärtige Spitze des Abschlusselementes 37b und eine axial einwärtige Spitze des Vorsprungs 18b einander nicht mehr. Dieser Moment bzw. Punkt mag Übergangsmoment oder Übergangspunkt genannt werden. In dem Übergangsmoment der vorzugsweise vollständigen Einführung des Kupplungssteckers 3 wird die in dem Indikator 9 bzw. in den Schenkeln 11a, 11b gespeicherte federelastische Energie freigegeben, so dass die Steckersicherung 7 automatisch und schlagartig von der ausgerückten Stellung in die eingerückte Stellung gezogen und der in Fig. 3B abgebildete Zustand erreicht wird. Nach Abschluss dieser schlagartigen Rastbewegung befindet sich die Steckersicherung 7 in der eingerückten Stellung gemäß Fig. 3B, so dass sich die Vorsprünge 18a, 18b in den jeweiligen Aufnahmen 19a, 19b des Indikators 9 befinden.

Es ist bevorzugt, dass die eingerückte Stellung der Steckersicherung 7 gemäß Fig. 3B mittels manueller Bedienung in die ausgerückte Stellung überführbar ist. Hierzu drückt der Nutzer zweckmäßigerweise die beiden Abschlusselemente 37a, 37b bzw. die Betätigungselemente 39a, 39b mit der vorzugsweise rauen/geriffelten Struktur in axial einwärtige Richtung, so dass eine mechanisch-elastische Spannung aufgebaut wird. Sobald die Abschlusselemente 37a, 37b die Bodenöffnungen 24a, 24b erreichen, entlädt sich die mechanische Spannung über eine Rückstellkraft, so dass die Steckersicherung 7 in die ausgerückte Stellung gemäß Fig. 3C, 4C springt. Vorzugsweise wird der Kupplungsstecker 3 hierdurch von der vollständig eingeschobenen Position (nicht in Verbindung mit der ausgerückten Stellung der Steckersicherung 7 abgebildet) in eine nahezu vollständig eingeschobene Position überführt (ebenfalls nicht abgebildet) und muss nur noch aus der Kupplungsbuchse 1 herausgezogen werden.

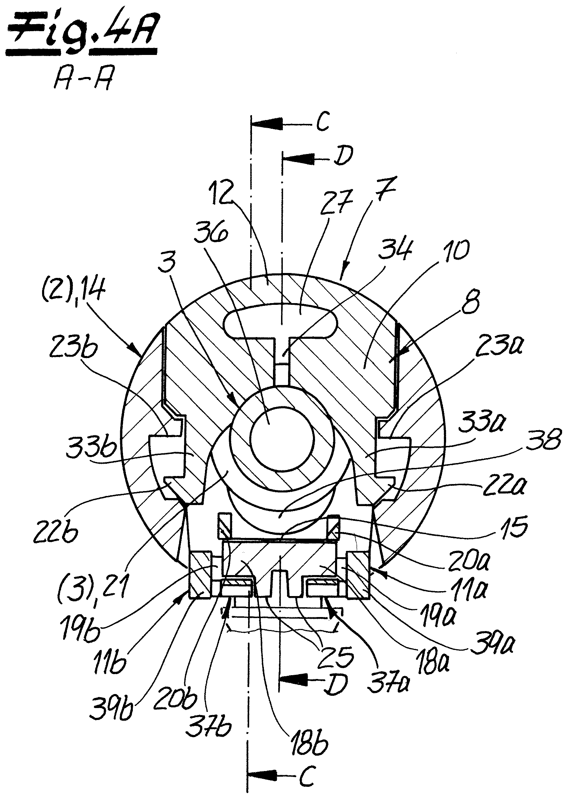

In Fig. 4A ist ein Querschnitt abgebildet, welcher in Fig. 3B durch die strichpunktierte Linie angedeutet ist. Umgekehrt sind die Längsschnitte der Figuren 3A und 3B in Fig. 4A mittels strichpunktierten Linien symbolisiert.

Der Querschnitt in Fig. 4A verläuft insbesondere durch die beiden Arme 33a, 33b des Rückhalters 8 und damit auch durch den Zwischenabschnitt 36 des Kupplungssteckers 3 sowie durch den Steckerabschnitt 14 des Kupplungskörpers 2. An der Stelle des Querschnitts in Fig. 4A weisen die Vorsprünge 18a, 18b eine recht große radiale Ausdehnung in Einschubrichtung der Steckersicherung 7 auf. Umgekehrt ist die radiale Ausdehnung der Abschlusselemente 37a, 37b relativ gering, vgl. Fig. 3B. In Fig. 4A ist erkennbar, dass die Kontaktrampen 20a, 20b vorzugsweise zwecks besserer Kraftübertragung von dem Verriegelungselement 21 auf die jeweilige Kontaktrampe 20a, 20b angeschrägt sind. Denn beim Einführen des Kupplungssteckers 3 trifft das Verriegelungselement 21 mit einem in Fig. 4A gezeigten, bodenseitigen Bereich auf die beiden Kontaktrampen 20a, 20b, wodurch die Auslenkung des Indikators 9 bzw. der Schenkel 11a, 11b beginnt.

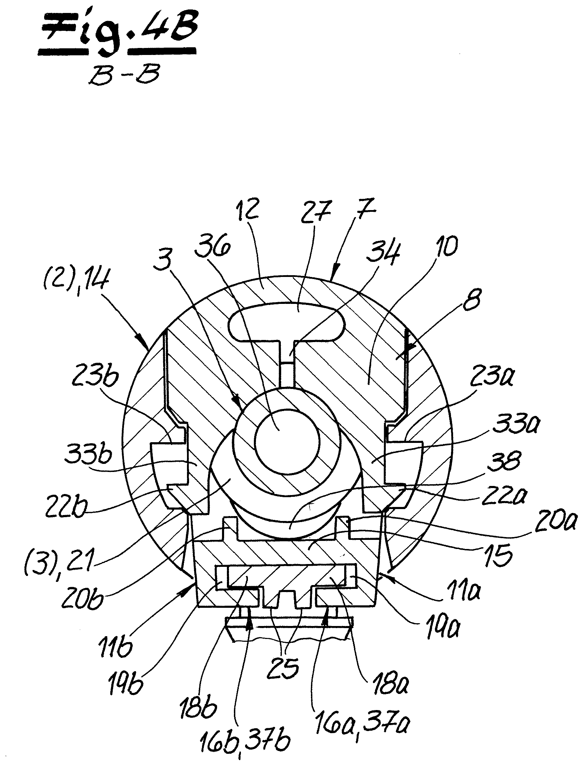

In Fig. 4B ist der Querschnitt abgebildet, wie er in Fig. 3B mit der entsprechenden strichpunktierten Linie angedeutet wird. Bevorzugtermaßen umschließt der Verbindungssteg 15 des Indikators 9 - vorzugsweise gemeinsam mit den Abschlusselementen 37a, 37b - die Vorsprünge 18a, 18b des Kupplungskörpers 2 formschlüssig. Vorzugsweise sitzen die Aufnahmen 19a, 19b des Indikators 9 auf den Vorsprüngen 18a, 18b, was einen vorteilhaften, festen Sitz der Steckersicherung 7 in dem Kupplungskörper 2 gewährleistet.

In Fig. 4C ist die ausgerückte Stellung der Steckersicherung 7 im Querschnitt abgebildet. In der ausgerückten Stellung sind vorzugsweise die Arme 33a, 33b der Steckersicherung 7 bzw. des Rückhalters 8 über die Rastelemente 22a, 22b mit Rastteilen 23a, 23b - vorzugsweise in Form von Schultern - des Kupplungskörpers 2 verrastet, so dass die Steckersicherung 7 sicher im Kupplungskörper 2 gehalten wird. Es ist bevorzugt, dass die Abschlusselemente 37a, 37b bzw. deren Stoßflächen 16a, 16b gleichzeitig an den Anschlagflächen 17a, 17b der Vorsprünge 18a, 18b des Kupplungskörpers 2 anschlagen. Durch die Verrastung einerseits sowie den Anschlag andererseits wird vorteilhafterweise gewährleistet, dass die Steckersicherung 7 in Einschubrichtung in der ausgerückten Stellung nicht beweglich ist, solange das Verriegelungselement 21 des Kupplungssteckers 3 den Indikator 9 nicht erreicht hat. Dies vermittelt einen hochwertigen Eindruck der Kupplungsbuchse 1.

Insgesamt bietet die Anordnung umfassend den bodenseitigen Teil des Kupplungskörpers 2 sowie das bodenseitige Ende des Indikators 9 eine sehr stabile und langlebige Rastvorrichtung, welche die Steckersicherung 7 automatisch bei der vollständigen Einführung des Kupplungssteckers 3 in den Kupplungskörper 2 hineinzieht. Dieser Mechanismus ist im Ergebnis robuster als der bereits im Stand der Technik bekannte Mechanismus der Erkennung des Zustands der vollständigen Einführung des Kupplungssteckers sowie des Mechanismus des automatischen Hineinziehens der Steckersicherung 7.

Außerdem springt die Steckersicherung 7 vorzugsweise durch einen manuell auszuübenden, axial einwärtigen Druck auf die bevorzugt rauen/geriffelten Betätigungselemente 39a, 39b von der eingerückten in die ausgerückte Stellung zurück. Hierdurch gestaltet sich auch das Lösen der Fluidkupplung 1, 3 sehr nutzerfreundlich. Im Ergebnis wurde eine völlig neuartige, hinsichtlich Robustheit und Nutzerfreundlichkeit herausragende Kupplungsbuchse 1 bzw. Fluidkupplung 1, 3 geschaffen.

### Bezugszeichenliste:

| | | | |
|---|---|---|---|
| 1 | Kupplungsbuchse | 25 | Steg von 24 |
| 2 | Kupplungskörper | 26 | Wandöffnung von 2 für 27 |
| 3 | Kupplungsstecker | 27 | Durchbruch von 7 |
| 4 | Erstes Körperende von 2 | 28 | Anschlussabschnitt von 3 |
| 5 | Zweites Körperende von 2 | 29 | Flansch von 3 |
| 6 | Fluidkanal von 2 | 30 | Kupplungsabschnitt von 3 |
| 7 | Steckersicherung | M | Mittenachse von 14 |
| 8 | Rückhalter | 31 | Verbindungsabschnitt von 2 |
| 9 | Indikator | 32 | Übergangsabschnitt von 2 |
| 10 | Halteabschnitt von 8 | 33a, 33b | Arm von 8 |
| 11a, 11b | Schenkel von 9 | 34 | Spalt von 7 |
| 12 | Rücken von 7, 9 | 35 | Dichtung |
| 13 | Boden von 2 | 36 | Strömungskanal von 3 |
| 14 | Steckerabschnitt von 2 | 37a, 37b | Abschlusselement |
| 15 | Verbindungssteg von 9 | 38 | Steckeröffnung von 9 |
| 16a, 16b | Stoßfläche von 7, 9 | 39a, 39b | Betätigungselement |
| 17a, 17b | Anschlagfläche von 2 | 40 | Decke |
| 18a, 18b | Vorsprung von 2 | | |
| 19a, 19b | Aufnahme von 7, 9 für 18 | | |
| 20a, 20b | Kontaktrampe von 9 | | |
| 21 | Verriegelungselement von 3 | | |
| 22a, 22b | Rastelement von 7 | | |
| 23a, 23b | Rastteil von 2 für 22 | | |
| 24a, 24b | Bodenöffnung von 2 für 11a, 11b | | |

## Patentansprüche

1. Kupplungsbuchse (1) für eine teilautomatische Fluidkupplung, wobei die Kupplungsbuchse (1) einen Kupplungskörper (2) aufweist, wobei die Kupplungsbuchse (1) ausgebildet ist, eine lösbare Rastverbindung mit einem in die Kupplungsbuchse (1) einsteckbaren Kupplungsstecker (3) einzugehen, wobei die Kupplungsbuchse (1) eine Steckersicherung (7) umfasst, wobei die Steckersicherung (7) einen Rückhalter (8) und einen Indikator (9) aufweist, wobei ein Halteabschnitt (10) des Rückhalters (8) ausgebildet ist, einen Kupplungsstecker (3) in dem Kupplungskörper (2) zu verriegeln,
wobei die Steckersicherung (7) in einem Steckerabschnitt (14) des Kupplungskörpers (2) angeordnet ist, wobei der Steckerabschnitt (14) eine Mittenachse (M) aufweist, wobei in einer Seitenansicht die Steckersicherung (7) in radialer Richtung in den Kupplungskörper (2) einführbar ist, wobei die Kupplungsbuchse (1) so ausgebildet ist, dass die Steckersicherung (7) eine relativ zum Kupplungskörper (2) radial ausgerückte Stellung und eine radial eingerückte Stellung einnehmen kann, wobei die Kupplungsbuchse (1) so ausgebildet ist, dass der Kupplungsstecker (3) in der eingerückten Stellung der Steckersicherung (7) durch den Rückhalter (8) in dem Kupplungskörper (2) in axialer Richtung gesichert ist,
wobei der Indikator (9) zwei Schenkel (11a, 11b) und einen Rücken (12) aufweist, wobei dem Rücken (12) abgewandte Enden der Schenkel (11a, 11b) ein Boden (13) des Kupplungskörpers (2) zugeordnet ist, wobei der Indikator (9) ausgebildet ist, bei einer Einführung eines Kupplungssteckers (3) auf eine direkte oder indirekte Berührung des Kupplungssteckers (3) zu reagieren, so dass die Steckersicherung (7) aufgrund einer Auslenkung des Indikators (9) automatisch von der ausgerückten Stellung in die eingerückte Stellung überführt wird,
**dadurch gekennzeichnet, dass**
die Kupplungsbuchse (1) so ausgebildet ist, dass die Schenkel (11a, 11b) durch eine einführende Bewegung des Kupplungssteckers (3) eine Auslenkung in axialer Richtung erfahren, wobei die Kupplungsbuchse (1) so ausgebildet ist, dass bodenseitige Enden der Schenkel (11a, 11b) während der Auslenkung durch den Kupplungsstecker (3) ihren Abstand zueinander beibehalten.

2. Kupplungsbuchse (1) nach Anspruch 1, wobei der Indikator einen Verbindungssteg (15) umfasst, wobei der Verbindungssteg (15) - bezogen auf die Mittenachse M während der ausgerückten und/oder der eingerückten Stellung - gegenüber dem Rücken (12) angeordnet ist und die Schenkel (11a, 11b) miteinander verbindet.

3. Kupplungsbuchse (1) nach einem der Ansprüche 1 oder 2, wobei die Kupplungsbuchse (1) so ausgebildet ist, dass bei einer Betätigung eines bodenseitigen Abschnitts des Indikators (9) in axialer, bevorzugt axial einwärtiger Richtung die Steckersicherung (7) von der eingerückten in die ausgerückte Stellung überführbar ist.

4. Kupplungsbuchse (1) nach einem der Ansprüche 1 bis 3, wobei ein bodenseitiges Ende der Steckersicherung (7) bzw. des Indikators (9) wenigstens ein Betätigungselement (39a, 39b) und bevorzugt zwei Betätigungselemente (39a, 39b) zum Überführen der Steckersicherung (7) von der eingerückten Stellung in die ausgerückte Stellung umfasst.

5. Kupplungsbuchse (1) nach einem der Ansprüche 1 bis 4, wobei die Schenkel (11a, 11b) des Indikators (9) in einer Seitenansicht und der Einschubrichtung der Steckersicherung (7) folgend nach axial außen gewinkelt bzw. gebogen sind.

6. Kupplungsbuchse (1) nach einem der Ansprüche 1 bis 5, wobei der Kupplungskörper (2) wenigstens einen sich nach axial innen erstreckenden Vorsprung (18a, 18b) aufweist, wobei der wenigstens eine Vorsprung (18a, 18b) bevorzugtermaßen in der eingerückten Stellung der Steckersicherung (7) in einer Seitenansicht wenigstens teilweise in axialer Richtung durch den Indikator (9) bzw. durch einen der Schenkel (11a, 11b) hindurch ragt.

7. Kupplungsbuchse (1) nach einem der Ansprüche 1 bis 6, wobei die Steckersicherung (7) bzw. der Indikator (9) in einer Vorderansicht wenigstens eine Aufnahme (19a, 19b) umfasst, wobei vorteilhafterweise die wenigstens eine Aufnahme (19a, 19b) ausgebildet ist, mit einem Element des Kupplungskörpers (2) zu verrasten.

8. Kupplungsbuchse (1) nach einem der Ansprüche 1 bis 7, wobei der Boden (13) des Kupplungskörpers (2) wenigstens eine Bodenöffnung (24a, 24b) aufweist, wobei vorzugsweise die Kupplungsbuchse (1) so ausgebildet ist, dass die Schenkel (11a, 11b) in einer Seitenansicht während des Übergangs von der ausgerückten in die eingerückte Stellung wenigstens abschnittsweise durch die wenigstens eine Bodenöffnung (24a, 24b) hindurch gleiten.

9. Kupplungsbuchse (1) nach einem der Ansprüche 1 bis 8, wobei ein Abschnitt des Indikators (9) bzw. der Schenkel (11a, 11b) in einer Seitenansicht in der ausgerückten Stellung in einer radialen Richtung zwischen dem Boden (13) und dem Rückhalter (8) bzw. einem Halteabschnitt (10) befindlich ist/sind.

10. Kupplungsbuchse (1) nach einem der Ansprüche 1 bis 9, wobei der Indikator (9) eine Berührungsfläche zur direkten oder indirekten Berührung des Kupplungssteckers (3) aufweist, wobei vorzugsweise die Kupplungsbuchse (1) bzw. die Steckersicherung (7) bzw. der Indikator (9) so ausgebildet ist, dass die Berührungsfläche während der eingerückten Stellung der Steckersicherung (7) - bezogen auf die Mittenachse M des Steckerabschnitts - gegenüber dem Rücken (12) des Indikators (9) angeordnet ist.

11. Kupplungsbuchse (1) nach einem der Ansprüche 1 bis 10, wobei die Kupplungsbuchse (1) so ausgebildet ist, dass die Steckersicherung (7) in der ausgerückten Stellung mit wenigstens einer Stoßfläche (16a, 16b) an wenigstens einer Anschlagfläche (17a, 17b) des Kupplungskörpers (2) anschlägt, so dass vorzugsweise die wenigstens eine Stoßfläche (16a, 16b) und die wenigstens eine Anschlagfläche (17a, 17b) die ausgerückte Stellung der Steckersicherung (7) definieren.

12. Kupplungsbuchse (1) nach einem der Ansprüche 1 bis 11, wobei die Steckersicherung (7) bzw. der Rückhalter (8) wenigstens ein Rastelement (22a, 22b) zum Einrasten in dem Kupplungskörper (2) aufweist, wobei bevorzugtermaßen das wenigstens eine Rastelement (22a, 22b) mit wenigstens einem komplementären Rastteil (23a, 23b) des Kupplungskörpers (2) wechselwirkt, so dass die Steckersicherung (7) in der ausgerückten Stellung in dem Kupplungskörper (2) gehalten bzw. verrastet ist.

13. Kupplungsbuchse (1) nach einem der Ansprüche 1 bis 12, wobei die Kupplungsbuchse (1) so ausgebildet ist, dass die ausgerückte Stellung und/oder die eingerückte Stellung der Steckersicherung (7) mit bloßem Auge und/oder mittels eines maschinenlesbaren Symbols und/oder mittels eines elektrischen Senders verifizierbar ist.

14. Teilautomatische Fluidkupplung (1, 3), umfassend eine Kupplungsbuchse (1) nach einem der Ansprüche 1 bis 13 und einen Kupplungsstecker (3), wobei der Kupplungsstecker (3) ein Verriegelungselement (21) zum Verriegeln in der Kupplungsbuchse (1) aufweist.

15. Verwendung einer Kupplungsbuchse (1) bzw. einer Fluidkupplung (1, 3) nach einem der Ansprüche 1 bis 13 und Anspruch 14 in einem Landfahrzeug, insbesondere in einem Straßenfahrzeug.

## Claims

1. A coupling bushing (1) for a semiautomatic fluid coupling, wherein the coupling bushing (1) has a coupling body (2), wherein the coupling bushing (1) is designed to enter into a detachable latched connection with a coupling plug (3) that can be inserted into the coupling bushing (1), wherein the coupling bushing (1) comprises a plug fuse (7), wherein the plug fuse (7) has a retainer (8) and an indicator (9), wherein a retaining section (10) of the retainer (8) is designed to lock a coupling plug (3) in the coupling body (2),
wherein the plug fuse (7) is arranged in a plug section (14) of the coupling body (2), wherein the plug section (14) has a central axis (M), wherein, as viewed from the side, the plug fuse (7) can be introduced into the coupling body (2) in a radial direction, wherein the coupling bushing (1) is designed in such a way that the plug fuse (7) can assume a radially extended and a radially retracted position relative to the coupling body (2), wherein the coupling bushing (1) is designed in such a way that the coupling plug (3) is secured by the retainer (8) in the coupling body (2) in an axial direction with the plug fuse (7) in the retracted position,
wherein the indicator (9) has two legs (11a, 11b) and a back (12), wherein a floor (13) of the coupling body (2) is allocated to the ends of the legs (11a, 11b) facing away from the back (12), wherein the indicator (9) is designed, when introducing the coupling plug (3), to react to a direct or indirect contact with the coupling plug (3), so that a deflection of the indicator (9) automatically transfers the plug fuse (7) from the extended position into the retracted position,
**characterized in that**
the coupling bushing (1) is designed in such a way as to deflect the legs (11a, 11b) in an axial direction during an introductory motion of the coupling plug (3), wherein the coupling bushing (1) is designed in such a way that floor ends of the legs (11a, 11b) maintain their distance from each other during the deflection by the coupling plug (3).

2. The coupling bushing (1) according to claim 1, wherein the indicator comprises a connecting web (15), wherein the connecting web (15) is arranged opposite the back (12) in relation to the central axis M during the extended and/or retracted position, and connect the legs (11a, 11b) with each other.

3. The coupling bushing (1) according to one of claims 1 or 2, wherein the coupling bushing (1) is designed in such a way that, when a floor section of the indicator (9) is activated in an axial, preferably an axially inward direction, the plug fuse (7) can be transferred from the retracted into the extended position.

4. The coupling bushing (1) according to one of claims 1 to 3, wherein a floor end of the plug fuse (7) or the indicator (9) comprises at least one activating element (39a, 39b) and preferably two activating elements (39a, 39b) for transferring the plug fuse (7) from the retracted position into the extended position.

5. The coupling bushing (1) according to one of claims 1 to 4, wherein the legs (11a, 11b) of the indicator (9) are angled or bent axially outward as viewed from the side and following the insertion direction of the plug fuse (7).

6. The coupling bushing (1) according to one of claims 1 to 5, wherein the coupling body (2) has at least one axially inwardly extending projection (18a, 18b), wherein the at least one projection (18a, 18b) preferably protrudes at least partially in an axial direction through the indicator (9) or through one of the legs (11a, 11b) as viewed from the side, preferably with the plug fuse (7) in the retracted position.

7. The coupling bushing (1) according to one of claims 1 to 6, wherein the plug fuse (7) or the indicator (9) comprises at least one receptacle (19a, 19b) as viewed from the front, wherein the at least one receptacle (19a, 19b) is advantageously designed to latch with an element of the coupling body (2).

8. The coupling bushing (1) according to one of claims 1 to 7, wherein the floor (13) of the coupling body (2) has at least one floor opening (24a, 24b), wherein the coupling bushing (1) is preferably designed in such a way that at least sections of the legs (11a, 11b) slide through the at least one floor opening (24a, 24b) as viewed from the side during the transfer from the extended to the retracted position.

9. The coupling bushing (1) according to one of claims 1 to 8, wherein a section of the indicator (9) or the legs (11a, 11b) is located in a radial direction between the floor (13) and the retainer (8) or a retaining section (10) as viewed from the side in the extended position.

10. The coupling bushing (1) according to one of claims 1 to 9, wherein the indicator (9) has a contact surface for directly or indirectly contacting the coupling plug (3), wherein the coupling bushing (1) or the plug fuse (7) or the indicator (9) are preferably designed in such a way that the contact surface is arranged opposite the back (12) of the indicator (9) in relation to the central axis M of the plug section during the retracted position of the plug fuse (7).

11. The coupling bushing (1) according to one of claims 1 to 10, wherein the coupling bushing (1) is designed in such a way that at least one impact surface (16a, 16b) of the plug fuse (7) strikes against at least one stop surface (17a, 17b) of the coupling body (2) in the extended position, so that preferably the at least one impact surface (16a, 16b) and the at least one stop surface (17a, 17b) define the extended position of the plug fuse (7).

12. The coupling bushing (1) according to one of claims 1 to 11, wherein the plug fuse (7) or the retainer (8) has at least one latching element (22a, 22b) for latching in the coupling body (2), wherein the at least one latching element (22a, 22b) most preferably interacts with at least one complementary latching part (23a, 23b) of the coupling body (2), so that the plug fuse (7) is retained or latched in the extended position in the coupling body (2).

13. The coupling bushing (1) according to one of claims 1 to 12, wherein the coupling bushing (1) is designed in such a way that the extended position and/or the retracted position of the plug fuse (7) can be verified with the naked eye and/or by means of a machine-readable symbol and/or by means of an electric transmitter.

14. A semiautomatic fluid coupling (1, 3), comprising a coupling bushing (1) according to one of claims 1 to 13 and a coupling plug (3), wherein the coupling plug (3) has a locking element (21) for locking in the coupling bushing (1).

15. Use of a coupling bushing (1) or a fluid coupling (1, 3) according to one of claims 1 to 13 and claim 14 in a land vehicle, in particular in a road vehicle.

## Revendications

1. Manchon d'accouplement (1) pour un embrayage hydraulique semi-automatique, sachant que le manchon d'accouplement (1) comporte un corps d'accouplement (2), sachant que le manchon d'accouplement (1) est constitué pour engendrer une liaison par encliquetage amovible avec un connecteur d'accouplement (3) enfichable dans le manchon d'accouplement (1), sachant que le manchon d'accouplement (1) comprend une sécurité de connecteur (7), sachant que la sécurité de connecteur (7) comporte un élément de retenue (8) et un indicateur (9), sachant qu'une section de retenue (10) de l'élément de retenue (8) est constituée pour verrouiller un connecteur d'accouplement (3) dans le corps d'accouplement (2),
sachant que la sécurité de connecteur (7) est disposée dans une section de connecteur (14) du corps d'accouplement (2), sachant que la section de connecteur (14) comporte un axe médian (M), sachant qu'en vue de côté, la sécurité de connecteur (7) peut être introduite en direction radiale dans le corps d'accouplement (2), sachant que le manchon d'accouplement (1) est constitué de telle manière que la sécurité de connecteur (7) peut adopter une position radialement désenclenchée et une position radialement enclenchée par rapport au corps d'accouplement (2), sachant que le manchon d'accouplement (1) est constitué de telle manière que le connecteur d'accouplement (3) est fixé dans la direction axiale dans le corps d'accouplement (2) par l'élément de retenue (8) dans la position enclenchée de la sécurité de connecteur (7), sachant que l'indicateur (9) comporte deux branches (11a, 11b) et une partie dorsale (12), sachant qu'un fond (13) du corps d'accouplement (2) est attribué aux extrémités des branches (11a, 11b) opposées à la partie dorsale (12), sachant que l'indicateur (9) est constitué pour réagir lors d'une introduction d'un connecteur d'accouplement (3) à un contact direct ou indirect du connecteur d'accouplement (3) de telle manière que la sécurité de connecteur (7) est transférée en raison d'une orientation de l'indicateur (9) automatiquement de la position désenclenchée à la position enclenchée,
**caractérisé en ce que**
le manchon d'accouplement (1) est constitué de telle manière que les branches (11a, 11b) subissent par un mouvement d'introduction du connecteur d'accouplement (3) une orientation en direction axiale, sachant que le manchon d'accouplement (1) est constitué de telle manière que les extrémités des branches (11a, 11b) du côté du fond conservent leur distance l'une par rapport à l'autre pendant l'orientation par le connecteur d'accouplement (3).

2. Manchon d'accouplement (1) selon la revendication 1, sachant que l'indicateur comprend une nervure de liaison (15), sachant que la nervure de liaison (15) est disposée en face de la partie dorsale (12), par rapport à l'axe médian (M) pendant la position désenclenchée et/ou enclenchée, et relie les branches (11a, 11b) entre elles.

3. Manchon d'accouplement (1) selon l'une quelconque des revendications 1 ou 2, sachant que le manchon d'accouplement (1) est constitué de telle manière que la sécurité de connecteur (7) peut être transférée de la position enclenchée à la position désenclenchée lors d'un actionnement d'une section de l'indicateur (9) du côté du fond dans la direction axiale, de préférence axialement vers l'intérieur.

4. Manchon d'accouplement (1) selon l'une quelconque des revendications 1 à 3, sachant qu'une extrémité côté du fond de la sécurité de connecteur (7) ou de l'indicateur (9) comprend au moins un élément de manoeuvre (39a, 39b) et de préférence deux éléments de manoeuvre (39a, 39b) pour transférer la sécurité de connecteur (7) de la position enclenchée à la position désenclenchée.

5. Manchon d'accouplement (1) selon l'une quelconque des revendications 1 à 4, sachant que les branches (11a, 11b) de l'indicateur (9) en vue de côté et suivant la direction d'introduction de la sécurité de connecteur (7) sont courbées et arquées axialement vers l'extérieur.

6. Manchon d'accouplement (1) selon l'une quelconque des revendications 1 à 5, sachant que le corps d'accouplement (2) comporte au moins une saillie (18a, 18b) s'étendant axialement à l'intérieur, sachant qu'au moins une saillie (18a, 18b) dépasse de préférence dans la position enclenchée de la sécurité de connecteur (7), en vue de côté, au moins en partie en direction axiale à travers l'indicateur (9) ou à travers une des branches (11a, 11b).

7. Manchon d'accouplement (1) selon l'une quelconque des revendications 1 à 6, sachant que la sécurité de connecteur (7) ou l'indicateur (9) comprend en vue de face au moins un logement (19a, 19b), sachant de façon avantageuse qu'au moins un logement (19a, 19b) est constitué pour s'encliqueter avec un élément du corps d'accouplement (2).

8. Manchon d'accouplement (1) selon l'une quelconque des revendications 1 à 7, sachant que le fond (13) du corps d'accouplement (2) comporte au moins une ouverture de fond (24a, 24b), sachant de préférence que le manchon d'accouplement (1) est constitué de telle sorte qu'en vue de côté, les branches (11a, 11b) coulissent au moins partiellement à travers au moins une ouverture de fond (24a, 24b) pendant le passage de la position désenclenchée à la position enclenchée.

9. Manchon d'accouplement (1) selon l'une quelconque des revendications 1 à 8, sachant qu'une section de l'indicateur (9) ou des branches (11a, 11b) se trouvent en vue de côté dans la position désenclenchée dans une direction radiale entre le fond (13) et l'élément de retenue (8) ou une section de retenue (10).

10. Manchon d'accouplement (1) selon l'une quelconque des revendications 1 à 9, sachant que l'indicateur (9) comporte une surface de contact pour le contact direct ou indirect du connecteur d'accouplement (3), sachant de préférence que le manchon d'accouplement (1) ou la sécurité de connecteur (7) ou l'indicateur (9) sont constitués de telle manière que la surface de contact est disposée en face de la partie dorsale (12) de l'indicateur (9) pendant la position enclenchée de la sécurité de connecteur (7), par rapport à l'axe médian M de la section de connecteur.

11. Manchon d'accouplement (1) selon l'une quelconque des revendications 1 à 10, sachant que le manchon d'accouplement (1) est constitué de telle manière que la sécurité de connecteur (7) dans la position désenclenchée vient en butée avec au moins une surface d'impact (16a, 16b) sur au moins une surface de butée (17a, 17b) du corps d'accouplement (2) de telle sorte que de préférence au moins une surface d'impact (16a, 16b) et au moins une surface de butée (17a, 17b) définissent la position désenclenchée de la sécurité de connecteur (7).

12. Manchon d'accouplement (1) selon l'une quelconque des revendications 1 à 11, sachant que la sécurité de connecteur (7) ou l'élément de retenue (8) comporte au moins un élément d'encliquetage (22a, 22b) pour encliqueter dans le corps d'accouplement (2), sachant de préférence qu'au moins un élément d'encliquetage (22a, 22b) interagit de préférence avec au moins une partie d'encliquetage complémentaire (23a, 23b) du corps d'accouplement (2) de telle manière que la sécurité de connecteur (7) est maintenue ou encliquetée dans la position désenclenchée dans le corps d'accouplement (2).

13. Manchon d'accouplement (1) selon l'une quelconque des revendications 1 à 12, sachant que le manchon d'accouplement (1) est constitué de telle façon que la position désenclenchée et/ou la position enclenchée de la sécurité de connecteur (7) peut être vérifiée à l'œil nu et/ou au moyen d'un symbole lisible par un appareil et/ou au moyen d'un émetteur électrique.

14. Embrayage hydraulique semi-automatique (1, 3), comprenant un manchon d'accouplement (1) selon l'une quelconque des revendications 1 à 13 et un connecteur d'accouplement (3), sachant que le connecteur d'accouplement (3) comporte un élément de verrouillage (21) pour verrouillage dans le manchon d'accouplement (1) .

15. Utilisation d'un manchon d'accouplement (1) ou d'un embrayage hydraulique (1, 3) selon l'une quelconque des revendications 1 à 13 et la revendication 14 dans un véhicule terrestre, en particulier dans un véhicule routier.
